# EUROPÄISCHE PATENTANMELDUNG

(11) **EP 1 083 749 A2**
(43) Veröffentlichungstag der Anmeldung: **14.03.2001**
(21) Anmeldenummer: 00116072.0
(22) Anmeldetag: 27.07.2000
(51) Int. Cl.: H04N 7/16

(54) **Verfahren und Vorrichtung zur selektiven Datenübermittlung über ein Rundfunkübertragungssystem**

(30) Priorität: 07.09.1999 DE 19943698
(71) Anmelder: Deutsche Telekom AG, 53113 Bonn (DE)
(72) Erfinder: Althoff, Jürgen, 48429 Rheine (DE); Boehnke, Norbert, 81825 München (DE)

(57) **Zusammenfassung**

Die bekannten Verfahren zur selektiven Datenübertragung über ein öffentliches Rundfunknetz sind mit variabel verschlüsselten Daten im Abonnementsystem durchführbar, wenn nur die Adressaten im Besitz eines aktuellen ihnen persönlich zugeordneten Schlüssels, z. B. einer befristet gültigen Chipkarte in Verbindung mit einer PIN sind. Ein für einen Zeitabschnitt fester geheimer Code beinhaltet die Gefahr unbefugter Benutzung. Außerdem ist jede Art von Zeitrahmen für den Beginn und die Beendigung eines Abonnements zu beliebiger Zeit sehr hinderlich.

Die Erfindung löst dieses Zeitproblem mittels eines Systems mit mehreren Schlüsseln, von denen sich einer von Anwendung zu Anwendung verändert. Die abonnierten Daten kennzeichnet ein statischer anwendungsspezifischer Schlüssel (Longkey), die Abonnenten kennzeichnet ein erstes binäres statisches Schlüsselwort (Privatekey), aus denen vom Inhaltsanbieter ein dem Teilnehmer zugeordnetes zweites variables Schlüsselwort (Shortkey), und bei deren Aufbereitung ein aus diesen Schlüsseln errechneter dritter, immer variierender Schlüssel (Superkey) hinzugefügt wird.

Anwendungsgebiete der Erfindung sind alle Arten von gesicherter Datendistribution von einem Inhaltsanbieter über einen oder mehrere Sender an viele Empfänger

## Beschreibung

Die Erfindung betrifft ein Verfahren der im Oberbegriff des Patentanspruch 1 und eine Vorrichtung der im Oberbegriff des Patentanspruchs 5 näher bezeichneten Art. Derartige Verfahren und Vorrichtungen sind allgemein bekannt und verbreitet und werden z. B. von kommerziellen TV- Anbietern für Antennen- und Satellitenrundfunk und Kabelfernsehen, auch für Pay- TV, für Sendungen benutzt, die nur mit Decoder empfangen werden können.

Sowohl öffentliche, als auch solche codierte Sendungen können zusätzlich mit Videotext versehen sein, der weitere Informationen enthält und mittels Videotext- Decoder empfangen wird, der auch für schnelleren Zugriff mit Grafik- Prozessor versehen sein kann, wie z. B. aus Langenkamp/Löwy 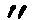 Megatext- IC für Videotext und Grafik" RFE 1994, Heft 7, Seiten 18 - 20 bekannt.

Aus DE 40 33 126 A1 sind auch Videotextsysteme bekannt, die Daten unter Verwendung einer Telefonleitung als Übertragungsmedium übertragen. Bei diesen Systemen werden Daten von Informationsanbietern in einem Informationszentrum akkumuliert und die akkumulierte Information wird Benutzern bzw. Teilnehmern zugeleitet, wenn sie diese über ihr Terminal anfordern. Es ist neben einem direkten auch an ein baumartiges Abrufverfahren gedacht. Während das Informationszentrum abgerufene Informationen übermittelt, ist eine Rückinformation über die beim Teilnehmer eingegangenen Bilder vorgesehen, die, nach einem Ausfall der Verbindung, bei neuerlichem Abruf mit einer Wiederherstellungstaste einen Anschluß an die bereits gesendeten Bilder gewährleisten soll. Die damit erreichbare Verminderung von Wiederholzeiten ist bei der notwendigerweise wegen der geringen Bandbreite langsamen drahtgebundenen Übermittlung ebenso wesentlich, wie beim 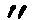 blättern" bei der Videotext-Übertragung über ein Fernseh-Empfangsgerät, das erheblichen Zeitaufwand des Teilnehmers und Zeitverzögerungen bis zur gewünschten Information verursacht. Auch fehlen bei solchen Geräten Archiv- oder Speichermöglichkeiten.

Diese Nachteile lassen sich verringern, wenn ein Computer mit einer Empfangseinrichtung unter Benutzung einer TV-Zusatzkarte mit Antennenanschluß und moderner Software als Wiedergabemedium benutzt wird. Diese kann auch Empfangskanal- Speicher enthalten und für Videotext und Datenrundfunk verwendbar sein.

Es sind auch andere Übertragungs- Systeme bekannt, die Daten in einem anderen Format als Videotext in den Prüfzeilen übertragen, z.B. INTERCAST von INTEL, das im Probebetrieb beim ZDF verwendet wird.

Mit solchen Mitteln sind auch selektive Datenübertragungen über ein öffentliches Rundfunkübertragungssystem bzw. über INTERNET mit verschlüsselten Daten im Abonnementsystem durchführbar, die nur von solchen Adressaten entschlüsselt werden können, die im Besitz eines aktuellen ihnen persönlich zugeordneten Schlüssels sind. Ein solcher Schlüssel kann, wie üblich, als befristet gültige Chipkarte in Verbindung mit einer PIN ausgeführt und evtl. codiert derart gespeichert sein, daß er nur dem Inhaltsanbieter mittels dessen geheimen Code die Identität des Adressaten verrät.

Die Verwendung eines solchen für einen Zeitabschnitt festen geheimen Codes stellt jedoch eine Gefahr sowohl für den Inhaltsanbieter als auch für den Adressaten dar, da mit dessen unbefugter Benutzung die Systemsicherheit zentral angegriffen werden kann. Außerdem ist jede Art von Zeitrahmen für den Beginn und die Beendigung eines Abonnements zu beliebiger Zeit sehr hinderlich. Es ist deshalb die Aufgabe der Erfindung, einen geheimen festen Schlüssel zu vermeiden und das Verfahren und die Vorrichtung so zu gestalten, daß ein Abonnement zu jeder beliebigen Zeit begonnen und beendet werden kann.

Die Erfindung löst diese Aufgabe mit den im Kennzeichen des Patentanspruchs 1 aufgeführten Verfahrensschritten.

Eine Vorrichtung, die zur Lösung dieser Aufgabe geeignet ist, ist im Kennzeichen des Patentanspruchs 5 beschrieben.

Vorteilhafte Aus- bzw. Weiterbildungen des Verfahrens sind in den Unteransprüchen 2 bis 4 beschrieben.

Eine vorteilhafte Weiterbildung der Vorrichtung beschreibt das Kennzeichen des Unteranspruchs 6.

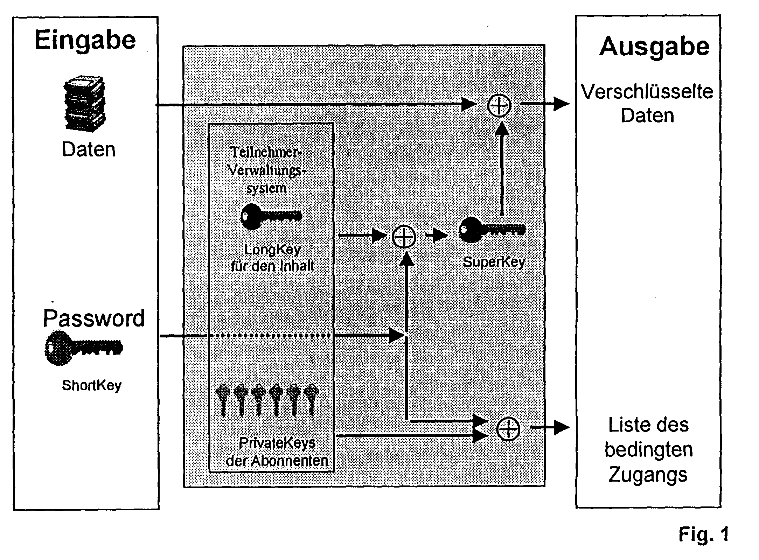

Nachfolgend wird die Erfindung in einem Ausführungsbeispiel anhand der zugehörigen Zeichnungen näher beschrieben. Hierin zeigen die
- Fig. 1: eine Übersicht der Daten- Schlüsselfunktionen zum Anlegen einer Liste für den bedingten Zugang beim Inhaltsanbieter

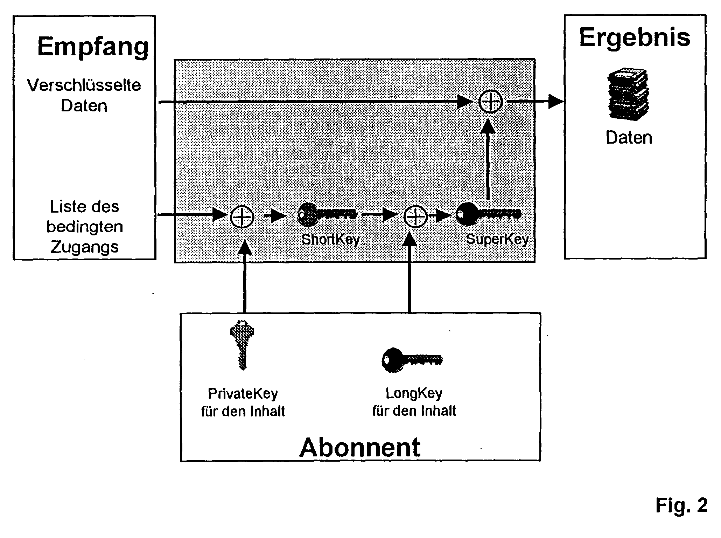

- Fig. 2: eine Übersicht der Daten- Schlüsselfunktionen beim Versorgen eines Abonnement- Teilnehmers mit Daten und

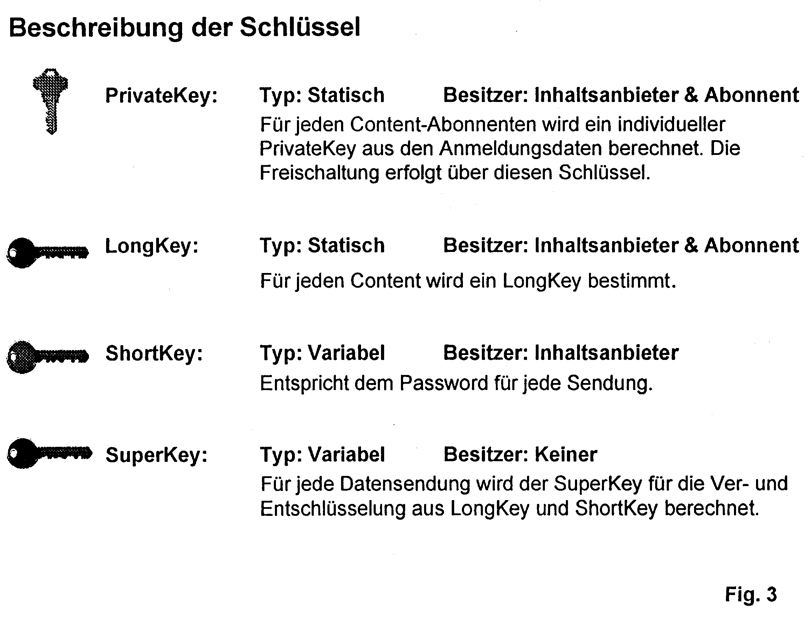

- Fig. 3: eine Übersicht über die verwendeten Schlüssel

Die Figuren zeigen die Zusammensetzung der Daten und Schlüssel anschaulich und bedürfen keiner zusätzlichen Erklärungen. Es wird deshalb nachfolgend das Entstehen und Beenden eines Abonnements näher erklärt:

Vom Inhaltsanbieter wird eine Liste aller angebotenen Abonnements mit den zugehörigen Gebühren erstellt.

Der Kunde erhält ein Produktpaket mit einer Steckkarte für den Empfang der Datenpakete, Antennenanschluß, sowie aufgezeichnete Installationssoftware. Die im Produktpaket enthaltene Software führt einen Sendersuchlauf durch und speichert die gefundenen Kanäle. Er kann auch durch die mitgelieferte Software auch bei der Anmeldung unterstützt werden.

Entschließt sich ein Kunde, ein Abonnement zu beantragen, so wird ihm zunächst unverschlüsselt eine Liste der angebotenen Abonnements mit den aktuellen Gebühren angezeigt.

Der Kunde wählt nun aus der Liste ein oder mehrere Abonnements, die er beantragen möchte, und füllt für die Anmeldung ein Formular aus.
Darin gibt der Kunde die notwendigen Informationen zu seiner Person ein, wie
- Name
- Straße
- Wohnort
- Zahlungsart
- gegebenenfalls Bankverbindung

Das ausgefüllte Formular kann der Kunde dann per Post, als Email oder als Fax an den Inhaltsanbieter senden.

Geht beim Inhaltsanbieter ein Abonnementantrag ein, so wird für jedes Abonnement auf der Grundlage der Kundeninformationen ein Paßwort (Privatekey) generiert. Dieses Paßwort wird zusammen mit der entsprechenden Gruppenbezeichnung, z.B.:
Gruppe = TVToday, Paßwort(Privatekey) = 123456789abcd an den Kunden zurückgeschickt.

Nach Erhalt gibt der Kunde das Paßwort einmalig bei der entsprechenden Gruppenbezeichnung in ein dafür vorgesehenes Formular ein. Diese Daten werden gespeichert, und der Kunde ist damit für den Empfang von Daten der entsprechenden Gruppe freigeschaltet. Er erhält in einer Art Briefkasten, auf den er über die Taskleiste Zugriff hat, Informationen über die vorgesehenen Übertragungszeiten, zu denen der Computer dann eingeschaltet sein soll. Dieser kann während der Übertragung auch anderweitig benutzt werden, da die Daten direkt der Festplatte zum Speichern zugeführt werden.

Beim Empfang der Daten werden zunächst mögliche Empfangsfehler durch Wiederherstellung der Bitreihenfolge (Interleave) und durch einen Selbstkorrektur- Algorithmus korrigiert. Danach erfolgt mit Hilfe des gespeicherten Paßwortes (Privatekey) eine automatische Dekodierung der Daten.

Nach anschließender Dekomprimierung werden die Daten auf der Festplatte gespeichert und stehen zur Ansicht zur Verfügung.

Geht ein Abonnementantrag ein, so wird mit Hilfe eines Paßwortgenerators aus den persönlichen Daten des Kunden ein individuelles Kundenpaßwort (Privatekey) erzeugt, das an den Kunden zurückgeschickt wird. Mit Erhalt und Eintrag des Privatekey in die Software ist der Benutzer empfangsberechtigt.

Der Privatekey, den der Benutzer vom Inhaltsanbieter erhält, wird aus den persönlichen Daten (Name und Anschrift) des Benutzers berechnet. Außerdem läßt sich der Indexwert der Shortkey- Liste (Freigabefile) aus dem Privatekey berechnen.

Jedes Datenpaket wird vor der Sendung verschlüsselt (Superkey). Zu jedem verschlüsselten Datenpaket wird ein zusätzliches File (Freigabefile) erzeugt, das zur Entschlüsselung notwendige Informationen enthält. Das Freigabefile wird nur von den Kunden empfangen, die für die entsprechende Gruppe freigeschaltet sind. Durch eine Änderung des Freigabefiles nimmt die übrige Datenmenge durch die Verschlüsselung nicht zu.

Das fertige Datenpaket, welches das zugehörige Freigabefile beinhaltet, wird vom Inhaltsanbieter an den TV-Sender geschickt. Dort können die Daten dann zu den vorgegebenen Zeiten gesendet werden. Vor der eigentlichen Datensendung wird eine Zeigerseite mit der Information über den Sendetermin gesendet.

Verliert der Benutzer seine Empfangsberechtigung, z.B. wegen ausbleibender Zahlung der Gebühren, wird für ihn ein ungültiger Shortkey generiert. Mit diesem ungültigen Shortkey, den die Software des Kunden aus der Shortkey- Liste extrahiert, ist der Benutzer nicht mehr in der Lage, einen gültigen Superkey zu bilden, wodurch eine Dekodierung der empfangenen Daten unmöglich ist.

Wird ein Abonnement endgültig aufgelöst, so kann die entsprechende Indexposition in der Shortkey- Liste neu vergeben werden.

Mit dem beschriebenen Verfahren gelingt eine gesicherte Datendistribution von einem Sender an viele Empfänger mit den Eigenschaften:
- Adressierung beliebig vieler Benutzer bzw. Benutzergruppen
- Zeitlich variable Gültigkeit der Adressierung,
- Vermeidung hardwaregestützter Identifikation,
- Variabler Verschlüsselungsgrad,
- Schlüsselwechsel ist für jede Sendung möglich,
- Skalierbarer Verschlüsselungsgrad für jede Sendung.

### Auflistung der verwendeten Schlüssel

### Superkey

Die eigentliche Datensendung ist mit einem Superkey verschlüsselt. Ohne aktuellen Superkey ist kein Zugriff auf die Daten möglich. Der Superkey wird aus dem Longkey und dem Shortkey errechnet.

### Longkey

Der Longkey ist der statische Teil des Superkeys. Für jede Gruppe wird einmalig ein Longkey bestimmt. Der Longkey wird mit der Zeigerseite gesendet.

### Shortkey

Von der Zentrale wird für jeden Benutzer ein Shortkey generiert und daraus eine indizierte Liste erstellt. Diese Liste (Freigabefile) wird vor der eigentlichen Datensendung ausgestrahlt. Welcher Shortkey für welchen Benutzer bestimmt ist, wird durch den Index festgelegt. Dieser kann aus dem Privatekey des Kunden berechnet werden.

Nach seiner Anmeldung erhält der Benutzer vom Anbieter den Privatekey.
Der Privatekey wird aus den persönlichen Daten (Name und Anschrift) des Benutzers berechnet. Außerdem läßt sich der Indexwert der Shortkey- Liste (Freigabefile) aus dem Privatekey berechnen.

## Patentansprüche

1. Verfahren zur selektiven Datenübermittlung über ein Rundfunkübertragungssystem, bei dem die Daten, die über dieses verteilt werden, mit vom Inhaltsanbieter verschlüsselten Zusatzdaten versehen werden, welche nur von solchen Adressaten entschlüsselt werden können, die im Besitz eines aktuellen, ihnen persönlich zugeordneten Schlüssels sind, **dadurch gekennzeichnet,** daß
- den Daten statische anwendungsspezifische Schlüssel (Longkey), die den Inhalt kennzeichnen, , Sendezeit und Adressinformationen, und getrennt in einem Teilnehmerverwaltungssystem verschlüsselte Paßworte für Zugriffsberechtigungen zugeordnet werden,
- vom Teilnehmerverwaltungssystem aus personenbezogenen Teilnehmerdaten ein erstes binäres statisches Schlüsselwort (Privatekey) gebildet wird,
- aus dem vom Inhaltsanbieter mittels einer verschlüsselt gesendeten Zuordnungsliste ein dem Teilnehmer zugeordnetes zweites variables Schlüsselwort (Shortkey) nach Dekodierung der Zuordnungsliste mittels des Privatekey für die Bildung des Berechtigungsschlüssels entnommen und den Daten, die einen anwendungsspezifischen Schlüssel enthalten, bei deren Aufbereitung ein aus diesen Schlüsseln errechneter dritter variabler Schlüssel (Superkey) hinzugefügt wird, und daß
- empfangsseitig alle eingegangenen Daten adresselektiv aufgenommen, mittels der personenbezogenen Teilnehmerdaten und des extrahierten Superkey auf Zugriffsberechtigung geprüft, und erst danach entschlüsselt, korrigiert und gespeichert werden.

2. Verfahren nach Anspruch 1, dadurch gekennzeichnet, daß die Daten parallel zum Videotext vom Fernsehsender übertragen werden.

3. Verfahren nach Anspruch 1, dadurch gekennzeichnet, daß vom Inhaltsanbieter zusätzlich unverschlüsselt eine Liste der jeweils angebotenen Abonnements mit zugehörigen Bestellbedingungen übertragen wird.

4. Verfahren nach Anspruch 1, dadurch gekennzeichnet, daß der Inhaltsanbieter für das Beenden eines Abonnements einen ungültigen Shortkey generiert und diesen aus seiner Liste der Zugriffsberechtigten extrahiert.

5. Vorrichtung zur selektiven Datenübermittlung über ein Rundfunkübertragungssystem, bei der ein Inhaltsanbieter Datenpakete an die Sender liefert und beim Empfänger ein Computer mit einer Empfangseinrichtung für Datenrundfunk und mit einem Empfangskanal- Speicher ausgerüstet, und mit einem Antennenanschluß versehen ist,
**dadurch gekennzeichnet,** daß die ausgesendeten Datenpakete, die vom Inhaltsanbieter an den Rundfunksender gehen, mit Adressen, Inhaltsgruppen-Bezeichnung und Sendezeit versehen, komprimiert, verschlüsselt und einem File zur Entschlüsselung versehen sind und daß die Empfangseinrichtung außer mit dem Empfangskanal- Speicher auch mit Abonnements- und Paßwort-Speichern und Filtern ausgerüstet ist und mit einen Schalter für die Verbindung zu einem dem Abonnement zugeordneten Bereich der Festplatte versehen ist.

6. Vorrichtung nach Anspruch 5, dadurch gekennzeichnet, daß die Empfangskanal- Speicher von den ausgesendeten Datenpaketen fernsteuerbar gestaltet sind.
